Europäisches Patentamt

European Patent Office

Office européen des brevets

(11) Veröffentlichungsnummer: **0 295 556**
**A2**

## (12) EUROPÄISCHE PATENTANMELDUNG

(21) Anmeldenummer: 88109115.1

(22) Anmeldetag: 08.06.88

(51) Int. Cl.4: **H02J 7/14 , H02J 9/06**

(30) Priorität: 15.06.87 US 61618

(43) Veröffentlichungstag der Anmeldung:
**21.12.88 Patentblatt 88/51**

(84) Benannte Vertragsstaaten:
**AT DE ES FR GB IT SE**

(71) Anmelder: **DEERE & COMPANY**
**1 John Deere Road**
**Moline Illinois 61265(US)**

(72) Erfinder: **Farber, Arnold Stanley**
**902 Juanita Avenue**
**Cedar Falls Iowa 50613(US)**
Erfinder: **Formwalt, Charles William, Jr.**
**Route 1 Box 383**
**Janesville Iowa 50647(US)**
Erfinder: **Baxter, Kenneth Dale**
**628 Oak Park Boulevard**
**Cedar Falls Iowa 50613(US)**
Erfinder: **Pfundstein, Donald Keith**
**101 Blake Road**
**Denver Iowa 50622(US)**

(74) Vertreter: **Feldmann, Bernhard et al**
**DEERE & COMPANY European Office, Patent**
**Department Steubenstrasse 36-42 Postfach**
**503**
**D-6800 Mannheim 1(DE)**

(54) **Elektrisches System.**

(57) Ein elektrisches System besteht aus zwei unabhängigen Systemkreisen mit jeweils einer eigenen Energiequelle und jeweils einem unkritischen Verbraucherkreis (22 bzw. 28). Ein kritischer Verbraucherkreis (24) ist jeweils über eine Diode (D1, D2) mit jedem der beiden Systemkreise verbunden, so daß ihm auch bei Fehlern in einem der Systemkreise noch Energie zugeführt wird.

EP 0 295 556 A2

### Elektrisches System

Die Erfindung betrifft ein elektrisches System mit mindestens zwei Batterien, mindestens zwei Generatoren, einem kritischen Verbraucherkreis, mindestens einem unkritischen Verbraucherkreis, zwei Dioden und Leitungen von jeder Batterie und jedem Generator zu jedem Verbraucherkreis, wobei die Dioden in den Leitungen vorgesehen sind.

Ein bekanntes elektrisches System (US-A-4 336 485) enthält zwei Systemkreise mit jeweils einem Generator, einer Batterie und einem Verbraucherkreis, wobei die Verbindung untereinander mittels einer gemeinsamen Leitung erfolgt. Während der eine Systemkreis für die herkömmlichen (unkritischen) Elektroaggregate eines Kraftfahrzeuges bestimmt ist, werden mittels des anderen Systemkreises wichtige (kritische) Elektroaggregate, z. B. die eines Rettungsfahrzeuges, betrieben. Zwar können die beiden Batterien auch von dem jeweils anderen Generator gespeist werden; in eine Leitung zwischen beide Batterien sind aber Dioden geschaltet, die einen Energieaustausch zwischen beiden Batterien normalerweise unterbinden. Die Dioden können durch manuell betätigbare Schalter überbrückt werden, um in besonderen Fällen jeweils einem der Systemkreise zusätzlich Energie des jeweils anderen Systemkreises einzuspeisen.

Dieses elektrische System ist insofern nachteilig, als der Systemkreis für die wichtigen Elektroaggregate nur ausnahmsweise mit Energie des anderen Systemkreises versorgt wird, daß es grundsätzlich aber möglich ist, diese wichtigen Elektroaggregate sowohl aus dem einem wie dem anderen Systemkreis zu speisen. Während also im ersten Fall z. B. ein Beatmungsgerät wegen Energiemangel versagen könnte und die Gefahr besteht, daß der Schalter zum Zuführen zusätzlicher Energie aus dem anderen Systemkreis zu spät betätigt wird, kann es passieren, daß im zweiten Fall stets dieselbe Energiequelle benutzt wird und sich so entlädt.

Die der Erfindung zugrunde liegende Aufgabe wird darin gesehen, ein elektrisches System mit mindestens zwei Energiequellen vorzuschlagen, das eine Energieversorgung sowohl für einen kritischen als auch einen unkritischen Verbraucherkreis gewährt, wobei die Energieversorgung des kritischen Verbraucherkreises bestmöglichst gesichert sein muß.

Diese Aufgabe ist durch die Merkmale des Patentanspruchs 1 wie die des Patentanspruchs 3 gleichermaßen erfindungsgemäß gelöst, wobei in den Unteransprüchen jeweils vorteilhafte Weiterentwicklungen der Lösung angegeben sind.

Auf diese Weise führen beide Energiequellen stets, und ohne daß es der Betätigung eines separaten Schalters bedarf, dem kritischen Verbraucherkreis Energie zu, wobei durch die Anschlußart der Dioden eine Trennung beider Energiequellen und der mit ihnen verbundenen Systemteile verwirklicht wird. Sollte also eine der Energiequellen versagen, wird dem kritischen Verbraucherkreis Energie aus der anderen Energiequelle zugeführt.

Ein unbemerkter und ungewollter Entladevorgang in einem der Verbraucherkreise kann sich aufgrund der Anschlußart der Dioden nicht auf den anderen Verbraucherkreis und insbesondere nicht auf dessen Batterie auswirken.

Es ist jedoch eine spürbare Unterstützung, wenn als Ausnahmefall einem viel Energie benötigenden Motor, insbesondere einem Startermotor, stets Energie aus beiden Energiequellen zugeführt wird.

Die Erfindung sieht also zwei grundsätzlich getrennte und unabhängige Systemkreise vor, die nur zur Speisung eines kritischen Verbraucherkreises stets gemeinsam mit diesem verbunden sind und zum Betreiben eines Motors gemeinsam an diesen angeschlossen werden können.

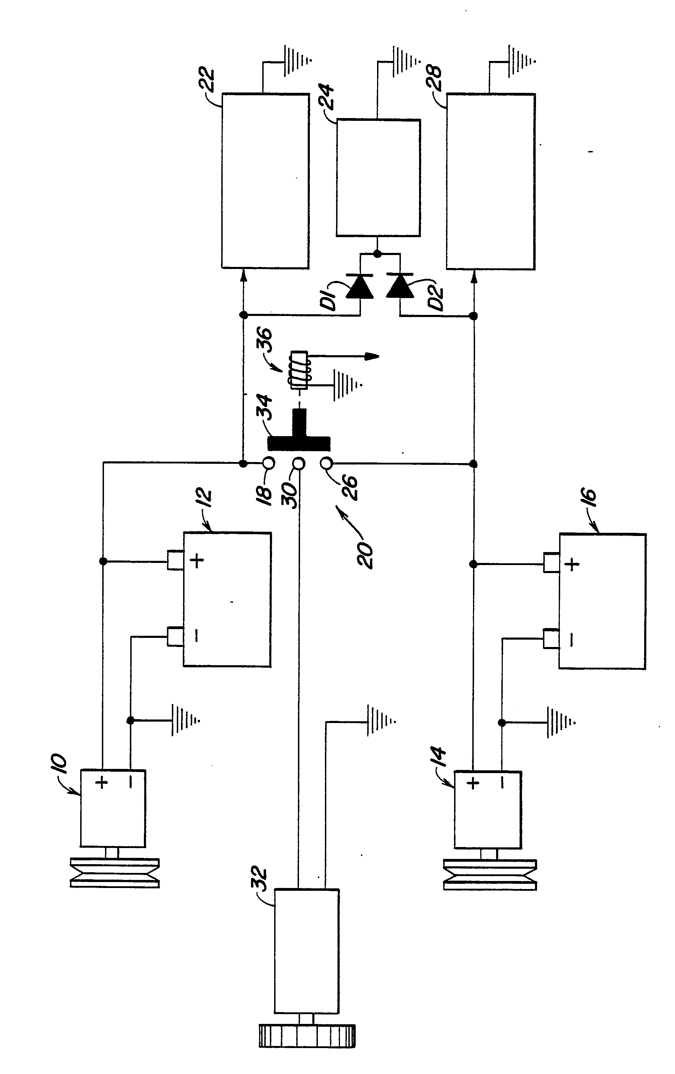

In der Zeichnung ist ein nachfolgend näher beschriebenes Ausführungsbeispiel der Erfindung dargestellt.

Ein erfindungsgemäßes elektrisches System für ein Fahrzeug enthält einen ersten und einen zweiten Generator 10 und 14, die von einem nicht gezeigten Verbrennungsmotor angetrieben werden und jeweils parallel zu einer Batterie 12 bzw. 16 geschaltet sind. Jeder Generator 10, 14 bildet mit der ihm jeweils zugeordneten Batterie 12, 16 die Energiequelle für jeweils einen nicht bezifferten Systemkreis. Der Begriff -Generator- ist allgemeiner Natur und umfaßt sowohl herkößmliche Fahrzeuggeneratoren mit mechanischer Gleichrichtung als auch solche mit Diodengleichrichtung.

Die +-Anschlüsse des Generators 10 und der Batterie 12 sind über eine Leitung untereinander, mit einem Anschluß 18 eines magnetbetätigten Schalters 20 für einen Motor 32 eines Starters, mit einem ersten unkritischen elektrischen Verbraucherkreis 22 und über eine Diode D1 mit einem kritischen Verbraucherkreis 24 verbunden. Die +-Anschlüsse des Generators 14 und der Batterie 16 sind über eine weitere Leitung untereinander, mit einem Anschluß 26 des magnetbetätigten Schalters 20, mit einem zweiten unkritischen elektrischen Verbraucherkreis 28 und über eine Diode D2 mit dem kritischen Verbraucherkreis 24 verbunden. Ein dritter Anschluß 30 des Schalters 20 führt zu dem Motor 32. Der Schalter 20 enthält ein Kontaktglied 34, das sich bewegt, sobald einem Startermagneten 36 Energie zugeführt worden ist, um eine gleichzeitige elektrische Verbindung zwischen den Anschlüssen 18, 26 und 30 herzustellen, so daß beide Batterien 12 und 16 dem Motor 32 gleichzeitig Energie zuführen.

Bei dem vorbeschriebenen elektrischen System sind stets beide Generatoren 10, 14 und Batterien 12, 16 eines Systemkreises an den kritischen Verbraucherkreis 24 angeschlossen, so daß diesem auch dann Energie zur Verfügung steht, wenn ein Fehler in einem der Systemkreise, insbesondere in dessen Energieversorgung, auftritt. Andererseits ist jeder unkritische Verbraucherkreis - sofern der Schalter 20 geöffnet ist - nur mit einem Generator 10 bzw. 14 und Batterie 12 bzw. 16 verbunden, so daß sich ein Fehler in einem der Verbraucherkreise 22, 28 nicht auf den anderen Verbraucherkreis 28, 22 oder auf den anderen Systemkreis auswirkt.

## Ansprüche

1. Elektrisches System mit mindestens zwei Batterien (12, 16), mindestens zwei Generatoren (10, 14), einem kritischen Verbraucherkreis (24), mindestens einem unkritischen Verbraucherkreis (22, 28), zwei Dioden (D1, D2) und Leitungen von jeder Batterie (12, 16) und jedem Generator (10, 14) zu jedem Verbraucherkreis (22, 24, 28), wobei die Dioden (D1, D2) in den Leitungen vorgesehen sind, dadurch gekennzeichnet, daß die Kathoden der Dioden (D1, D2( jeweils ständig mit dem kritischen Verbraucherkreis (24) und die Anoden mit der zugehörigen Batterie (12, 16) bzw. dem Generator (10, 14) verbunden sind.

2. Elektrisches System nach Anspruch 1 mit einem Motor (32), insbesondere einem Startermotor, dadurch gekennzeichnet, daß die Leitungen parallel an einen Schalter (20) für den Motor (32) angeschlossen sind und bei Betätigung des Schalters (20) beide Batterien (12, 16) mit dem Motor (32) verbunden sind.

3. Elektrisches System, gekennzeichnet durch zwei Systemkreise mit jeweils einem Generator (10, 14), einer Batterie (12, 14) und einem unkritischen Verbraucherkreis (22, 28), die an eine Leitung parallel zueinander angeschlossen sind, wobei jede Leitung an die Anode einer Diode (D1, D2) angreift, während deren Kathode mit einem kritischen Verbraucherkreis (24) verbunden ist, und wobei die Kathoden zueinander parallel geschaltet sind.

4. Elektrisches System nach Anspruch 3, dadurch gekennzeichnet, daß mit jeder Leitung ein Schalter (20) für einen Motor (32), insbesondere für einen Startermotor, verbunden ist und bei Betätigung des Schalters (20) der Motor (32) von beiden Batterien (12, 16) gespeist wird.

13154